# EUROPEAN PATENT APPLICATION

(11) **EP 3 299 194 A1**
(43) Date of publication of application: **28.03.2018**
(21) Application number: 16792844.9
(22) Date of filing: 30.03.2016
(51) Int. Cl.: B60H 1/00, B60N 2/56, H05B 3/10, B60L 11/18

(54) **HEATING DEVICE FOR ELECTRIC VEHICLE AND METHOD FOR CONTROLLING SAME**

(30) Priority: 14.05.2015 KR 20150067230
(71) Applicant: Dae Wha Alloytech Co. Ltd., Dangjin-si, Chungcheongnam-do 31806 (KR)
(72) Inventor: KIM, Yoon Jin, Yongin-si Gyeonggi-do 16809 (KR); CHO, Jin Woo, Seongnam-si Gyeonggi-do 13599 (KR); SHIN, Kwon Woo, Hwaseong-si Gyeonggi-do 18452 (KR); PARK, Ji Sun, Yongin-si Gyeonggi-do 16868 (KR)
(74) Representative: Groth & Co. KB
(86) International application number: PCT/KR2016/003281
(87) International publication number: WO 2016/182198

(57) **Abstract**

A heating device for an electric vehicle, according to an embodiment of the present invention, comprises: a water pump which is for circulating supplied water; a heating resistor which has one or more surface type heating elements formed by means of a heating paste composition and is for heating the circulated water; a water temperature sensor which is for measuring the temperature of the hot water heated by means of the heating resistor; and a control unit which is for adjusting the heating resistor such that the measured temperature measured by means of the water temperature sensor satisfies a set temperature value, wherein the heating paste composition comprises, on the basis of 100 parts by weight of the total heating paste composition, 3-6 wt % of carbon nanotube particles, 0.5-30 wt % of carbon nanoparticles, 10-30 wt % of a mixed binder, 29-83 wt % of an organic solvent, and 0.5-5 wt % of a dispersant, wherein the mixed binder has epoxy acrylate, polyvinyl acetal and phenolic resin mixed therein or has hexamethylene diisocyanate, polyvinyl acetal and phenolic resin mixed therein.

## Description

### [Technical Field]

The teachings in accordance with exemplary and non-limiting embodiments of this disclosure relate generally to a heater apparatus for electric vehicle and a control method thereof.

### [Background Art]

In general, a vehicle is equipped with a heating apparatus for heating an interior of the vehicle. The heating apparatus may use heat generated from an engine and may use a heat source other than engine, and may be categorized, depending on a heat source, into a hot water type using a cooling water of an engine, and a burner type using an independent burner not using an exhaust heat of an engine.

The hot water type heating apparatus, *inter alia*, is configured for heating in a fashion such that some of the cooling water heated by high heat of an engine is introduced into a heater to heat air around the heater, and the heated air is introduced into a vehicle through a blower.

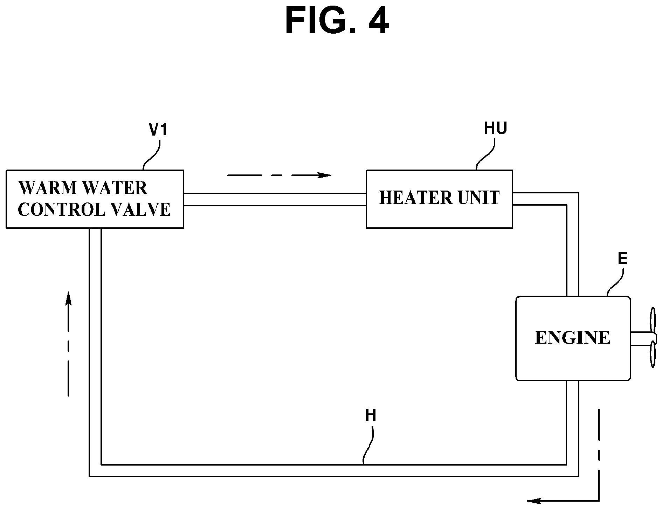

FIG. 4 is a schematic view illustrating a configuration of a hot water type heating apparatus using waste heat of an engine according to prior art, where the view illustrates a connected state of a duct (H) reaching a heater unit (HU) from an engine (E). A non-descriptive reference numeral 'VI' indicates a hot water control valve (V) that blocks a hot water entering the heater unit (HU) when there is no heating. The heating by the hot water heating apparatus according to prior art is realized in such a manner that an air inside a heater unit is heated by allowing the hot water to pass the duct through a water jacket, and the heated air is blown into a vehicle through a blower to heat the vehicle.

However, recently, concomitant with a trend that a vehicle using an internal combustion engine is changed to an electric vehicle using electric parts such as an electric battery and an electric motor, a hot water type heating using a waste heat of an engine in an internal combustion engine became impossible. In order to combat this trend, a technique is required that can maximize a heating efficiency while maximally using an apparatus used to be employed in the conventional hot water heating apparatus.

### [Detailed Description of the Invention]

### [Technical Subject]

An object of the present disclosure is to provide a heater apparatus for electric vehicle configured to maximize a heating efficiency while applying a heating resistor including a plane heater to a conventional heater apparatus, and a control method thereof. Another object is to provide a heater apparatus for electric vehicle including a heat generating paste composition having a high heat resistance and drivable in low voltage and low power due to low in resistor change caused by temperature and low in specific resistance, and a control method thereof.

### [Technical Solution]

In order to solve the technical subject, and in one general aspect of the present invention, there is provided a heater apparatus for electric vehicle, the heater apparatus comprising:
a water pump circulating a supplied water;
a heating resistor mounted with at least one plane heater formed through a heat generating paste composition to heat the circulated water;
a water temperature sensor measuring a temperature of warm water heated by the heating resistor; and
a controller adjusting the heating resistor to allow a measurement temperature measured by the water temperature sensor to satisfy a set temperature value, wherein the heat generating paste composition includes a carbon nano tube particle 3∼6 parts by weight, a carbon nanoparticle 0.5∼30 parts by weight, a mixed binder 10∼30 parts by weight, an organic solvent 29∼83 parts by weight and a dispersant 0.5 ∼5 parts by weight, against a heat generating paste composition 100 parts by weight, wherein
the mixed binder is mixed with epoxy acrylate, polyvinyl acetal and phenolic resin, or mixed with hexamethylene diisocyanate, polyvinyl acetal and phenolic resin.

Preferably, but not necessarily, the warm water heated by the heating resistor may be distributed to a plurality of seat heaters, and the plurality of seat heaters may include a one side seat heater arranged at one side of a vehicle by being formed with a passenger seat heater and a driver heater, and the other side seat heater arranged at the other side of the vehicle by being formed with a plurality of passenger seat heaters, and the one side seat heater and the other side seat heater are mutually connected in parallel through a parallel pipe.

Preferably, but not necessarily, the set temperature value may satisfy a temperature range of 60°C∼ 65°C.

Preferably, but not necessarily, the heat apparatus may further comprise a pipe temperature sensor measuring a temperature of warm water in order to determine whether the heating resistor is overheated.

Preferably, but not necessarily, the mixed binder may be mixed with polyvinyl acetal 10∼150 parts by weight and phenolic resin 100∼500 parts by weight against epoxy acrylate or hexamethylene diisocyanate 100 parts by weight.

Preferably, but not necessarily, the heat apparatus may further comprise a silane coupling agent 0.5∼5 parts by weight against the heat generating paste composition 100 parts by weight.

Preferably, but not necessarily, the carbon nano tube particle may be a multi-wall carbon nano tube particle.

Preferably, but not necessarily, the organic solvent may be a solvent mixed with two or more substances selected from carbitol acetate, butyl carbitol acetate, DBE(dibasic ester), ethyl carbitol, ethyl carbitol acetate, dipropylene glycol methyl ether, cellosolve acetate, bytyl cellosolve acetate, butanol and octanol.

Preferably, but not necessarily, the plane heater may be formed by the heat generating paste composition being screen printed, gravure printed or comma coated on a substrate.

Preferably, but not necessarily, the substrate may be a polyimide substrate, a glass fiber mat, or a ceramic glass.

Preferably, but not necessarily, the plane heater may further include a protective layer coated on an upper surface of the plane heater and formed with an organic matter having a silica or a black pigment like a carbon black.

Preferably, but not necessarily, the heat apparatus may further comprise a power supply part supplying an electric power to the plane heater.

In another general aspect of the present disclosure, there is provided a method for controlling a heater apparatus for electric vehicle, the method comprising:
heating a heating resistor to allow a supplied water to be a warm water satisfying a set temperature value;
transmitting the heated water to a plurality of seat heaters inside a vehicle in a parallel way;
collecting warm water heat-exchanged by the plurality of seat heaters; and re-heating the collected warm water through the heating resistor, wherein the heating resistor is mounted with at least one plane heater formed through a heat generating paste composition, and wherein
the heat generating paste composition includes a carbon nano tube particle 3∼6 parts by weight, a carbon nanoparticle 0.5∼30 parts by weight, a mixed binder 10∼30 parts by weight, an organic solvent 29∼83 parts by weight and a dispersant 0.5∼5 parts by weight, against a heat generating paste composition 100 parts by weight, and wherein
the mixed binder is mixed with epoxy acrylate, polyvinyl acetal and phenolic resin, or mixed with hexamethylene diisocyanate, polyvinyl acetal and phenolic resin.

Preferably, but not necessarily, the method may further comprise: stopping operation of the heating resistor in the transmitting step when it is determined that the heating resistor is overheated by measuring a temperature of distributed warm water.

Preferably, but not necessarily, the method may further comprise: operating a water pump circulating the warm water for a predetermined time and then stopping the water pump in order to prevent an instantaneous water temperature caused by latent heat from rising when the heating step is completed.

Preferably, but not necessarily, the set temperature value may satisfy a temperature range of 60°C∼65°C.

### [Advantageous Effects of the Disclosure]

The advantageous effect of a heater apparatus for electric vehicle and a control method thereof according to the present disclosure may be explained as below: that is, according to at least one of exemplary embodiments of the present disclosure, a heating efficiency can be maximized while a heating resistor including a plane heater is applied to a conventional heat apparatus. Furthermore, according to at least one of exemplary embodiments of the present disclosure, the heater apparatus can include a heat generating paste composition low in resistance change caused by temperatures and drivable in a low voltage and a low electric power due a specific resistance being low.

### [Brief Description of Drawings]

FIG. 1 is a schematic diagram illustrating a heater apparatus for electric vehicle according to the present disclosure.
FIG. 2 is a flow chart illustrating a parallel-type warm water flow in a heater apparatus for electric vehicle according to the present disclosure.
FIG. 3 is a state diagram illustrating a heater apparatus for electric vehicle according to the present disclosure being applied to an electric vehicle.
FIG. 4 is a schematic view illustrating a configuration of a hot water type heating apparatus using waste heat of an engine according to prior art.
FIG. 5 is an image of specimen piece of a plane heater using a heat generating paste composition included in a heater apparatus for electric vehicle according to an exemplary embodiment of the present disclosure.
FIG. 6 is an image of a heat generation stability test of a plane heater manufactured by an exemplary embodiment of a heater apparatus for electric vehicle according to an exemplary embodiment of the present disclosure and a plane heater manufactured by a comparative example.

### [BEST MODE]

Exemplary embodiments of the present disclosure will be described in detail with reference to the accompanying drawings. Like reference numerals designate like elements throughout the specification, and any overlapping explanations that duplicate one another will be omitted. Accordingly, in some embodiments, well-known processes, well-known device structures and well-known techniques are not illustrated in detail to avoid unclear interpretation of the present disclosure.

Although the terms first, second, A, B,(a), (b), etc., may be used herein to describe various elements, components, regions, layers and/or sections, these elements, components, regions, layers and/or sections should not be limited by these terms. These terms may be only used to distinguish one element, component, region, layer or section from another region, layer or section.

In the following attached drawings, numerous specific details are set forth in order to provide a thorough understanding of the present disclosure. However, this disclosure may be embodied in many different forms and should not be construed as limited to any specific structure or function presented throughout this disclosure. Thus, the disclosure described herein is intended to embrace all such alternatives, modifications, variations and applications as may fall within the spirit and scope of the appended claims.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present disclosure.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.).

The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Hereinafter, a heater apparatus for electric vehicle and a control method thereof according to exemplary embodiments of the present disclosure will be described in detail with reference to the accompanying drawings.

In presenting the present disclosure, it should be appreciated that the present disclosure can be materialized in other particular forms to the knowledge of one skilled in the art within a spirit and within a scope not deviating from essential characteristics of the present disclosure.

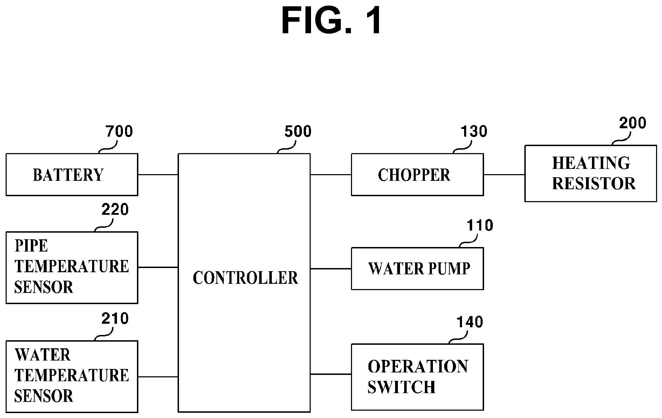

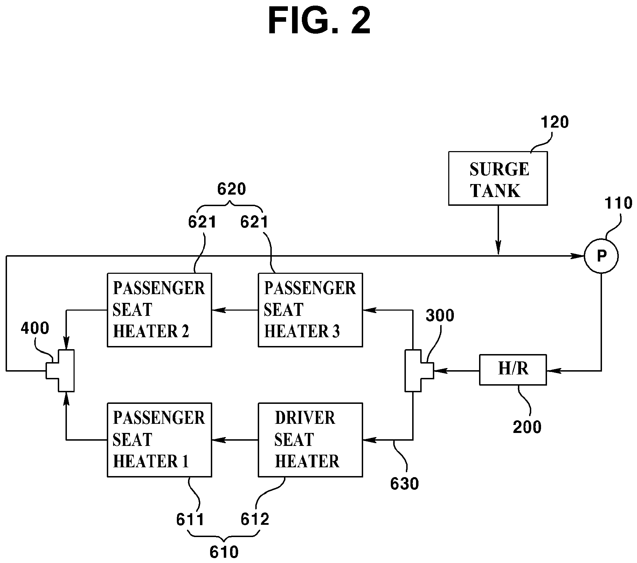

Referring to FIGS. 1 and 2, a heater apparatus for electric vehicle may be largely configured by including a water pump (110), a heating resistor (200), a water temperature sensor (210), a feed 3-way joint (300), a return 3-way joint (400) and a controller (500).

To be more specific, the water pump (110) may be comprised of a motorized pump to circulate water (warm water), where the water pump (110) receives water from a heating initial surge tank (120) and supplies the water to the heating resistor (200) and then, the supplies the warm water returned from the return 3-way joint (400) to the heating resistor (200).

The heating resistor (200) may be an electric heating device useable as a heat source replacing a conventional internal combustion engine, and may receive an operation signal from the controller (500) and a chopper (130) to heat the warm water with a maximum 30kw output. A heat generating paste composition according to an exemplary embodiment of the present disclosure may be used with a heating resistor (200) having a relevant flow speed of 120L/min and a power of 30kw@250V. The heat resistor (200) may include at least one plane heater.

Furthermore, the plane heater included in the heating resistor (200) may be formed by the heat generating paste composition being screen printed, gravure printed or comma coated on a substrate. The plane heater included in the heating resistor (200) and the heat generating paste composition forming the plane heater may be explained in detail later.

The heating resistor (200) may be operated when temperature of warm water satisfies a temperature range scope of 60°C∼ 65°C, which is a set temperature value. Toward this end, the heating resistor (200) may be provided with a water temperature sensor (210).

The water temperature sensor (210) may detect the temperature of warm water heated by the heating resistor (210) and transmit the detected warm water temperature to the controller (500), whereby the controller (500) can control the operation of the heating resistor (200) in response to the set temperature value. The feed 3-way joint (300) may distribute the warm water heated by the heating resistor (200) to a plurality of seat heaters within a vehicle. At this time, the feed 3-way joint (300) may be connected in parallel to the plurality of seat heaters.

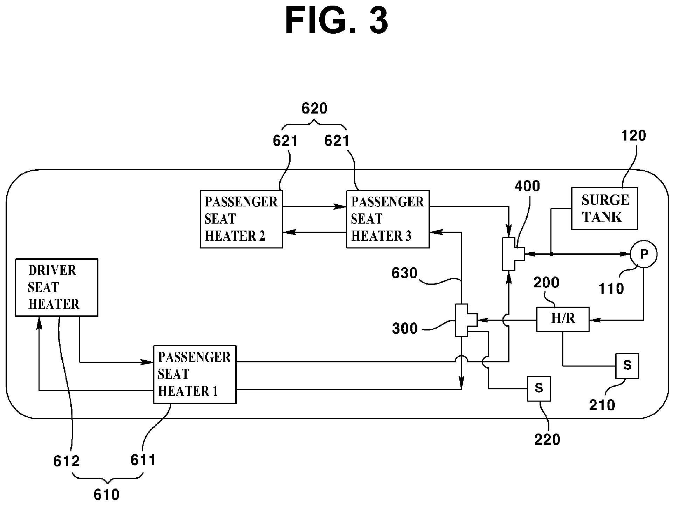

For example, as illustrated in FIG. 3, the plurality of seat heaters may include a one side seat heater (610) arranged at one side of the vehicle and an other side seat heater (620) arranged at the other side of the vehicle, where the one side seat heater (610) and the other side seat heater (620) may be connected in parallel to the feed 3-way joint (300) through a parallel pipe (630). Here, the one side seat heater (610) may include a passenger seat heater (611) and a driver seat heater (612), where the other side seat heater (620) may include a plurality of passenger seat heater (621).

As discussed above, the warm water heated by the heating resistor (200) may be adequately distributed in parallel method to the one side seat heater (610) and to the other side seat heater (620) to thereby minimize a heat flow loss. The feed 3-way joint (300) may be mounted with a pipe temperature sensor (220) measuring a temperature of the warm water. The pipe temperature sensor (220) may prevent the heating resistor (200) from being overheated exceeding a predetermined temperature due to erroneous operation/mis-operation of the water temperature sensor (210) by measuring a temperature of warm water introduced into the parallel pipe (630).

The return 3-way joint (400) may collect the warm water heat-exchanged by the plurality of seat heaters and return the collected warm water to the water pump (110). The warm water returned from the water pump (110) may be re-heated through the heating resistor (200) to repeat the circulation for heating. The controller (500) may receive useable or available power information from a battery (700), and adjust the heating resistor (200) in order for the measured temperature measured by the water temperature sensor (210) to satisfy the set temperature value. At this time, the set temperature value is preferable to allow the temperature of warm water to satisfy the temperature range of scope of 60°C∼ 65°C. Thus, the controller (500) may continuously maintain the operation of the heating resistor (200) when the measure temperature measured by the water temperature sensor (210) is less than 60°C, and stop the operation of the heating resistor (200) when the measure temperature measured by the water temperature sensor (210) is more than 65°C.

In addition, when a stop signal for completion of heating is received from outside, the controller (500) may stop the heating resistor (200) by allowing the water pump (110) to further operate for a predetermined time (e.g., 3 minutes) after other heater devices are stopped. This is to prevent the water temperature inside the heater devices from instantly rising due to latent heat.

Meantime, the stop signal and the operation signal applied to the controller (500) may be implemented by a separate operation switch (140). The operation switch (140) may be comprised of a driver seat heater control for controlling the driver seat heater (612) and a passenger seat heater control for controlling passenger seat heaters (611, 621), where the a driver seat heater control and the passenger seat heater control may respectively transmit the operation signal to the controller (500) by controlling the driver seat heater (612) and the passenger seat heaters (611, 621). For example, when blower switch of the driver seat heater control or a blower switch of the passenger seat heater control is operated, a relevant operation signal may be transmitted to the controller (500) where the controller (500) may operate the water pump (110) and the heating resistor (200) in response to the operation signal.

Hereinafter, a heater control method according to the present disclosure thus configured will be described.
The heater control method according to the present disclosure may include: heating a heating resistor including a plane heater; distributing heated warm water in a parallel method; collecting heat-exchanged warm water; and re-heating the warm water.

The step of heating the heating resistor may include heating the water to satisfy the temperature range scope of 60°C∼ 65°C, which is a set temperature value by receiving water from a surge tank (120) through the water pump (110). Here, a heating resistor (200) may heat the water through a mounted plane heater. The plane heater heating the water may be formed by a heat generating paste composition printed or coated on a substrate. At this time, when the measurement temperature measured by a water temperature sensor (210) is less than 60°C, the operation of the heating resistor (200)may be continuously maintained, and when the measurement temperature measured by a water temperature sensor (210) is more than 65°C, the operation of the heating resistor (200)may be stopped. The warm water heated to of 60°C∼ 65°C may be distributed in parallel method through a feed 3-way joint (300).

The step of distributing the heated warm water in parallel method may include distributing in parallel the heated warm water to a plurality of seat heaters inside a vehicle through the feed 3-way joint (300), e.g., a one side seat heater (610) and a the other side seat heater (620). At this time, a temperature of warm water may be measured through a pipe temperature sensor (220) to determine whether the heating resistor (200) is overheated through the measured temperature , and when it is determined that the heating resistor (200) is overheated, the operation of the heating resistor (200) is stopped. The warm water distributed to the one side seat heater (610) and the other side seat heater (620) may be collected through a return 3-way joint (400).

The step of collecting the heat-exchanged warm water may include returning the warm water heat-exchanged at the plurality of seat heaters to the water pump (110) through the return 3-way joint (400). The returned warm water to the water pump (110) may be moved to the heating resistor (200) for re-heating the returned warm water.

The step of re-heating the warm water may include re-heating the warm water moved from the water pump (110) through the heating resistor (200). The re-heated warm water may be moved to the feed 3-way joint to repeat the aforesaid steps.

When the heating step is completed, the water pump (110) circulating the warm water may be stopped after operating for a predetermined time in order to prevent the water temperature from instantly rising due to latent heat.

Meantime, the heat generating paste composition (hereinafter referred to as "heat generating paste composition") according to an exemplary embodiment of the present disclosure may include a carbon nano tube particle, a carbon nano particle, a mixed binder, an organic solvent and a dispersant.

To be more specific, the heat generating composition may include a carbon nano tube particle 3∼6 parts by weight, a carbon nano particle 0.5∼30 parts by weight, a mixed binder 10∼30 parts by weight, an organic solvent 29∼83 parts by weight and a dispersant 0.5∼5 parts by weight, against a heat generating paste composition 100 parts by weight.

The carbon nano tube particle may be selected from a single walled carbon nano tube, a double-walled carbon nanotube, a multi-wall nano tube or a mixture thereof. For example, the carbon nano tube particle may be a multi-wall nano tube. When the carbon nano tube particle is a multi-wall carbon nano tube, a diameter may be 5∼30nm, and a length may be 3 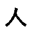 m∼40 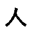 m. The carbon nano tube particle may be a graphic nano particle, and a diameter may be 1/ 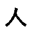 m∼25 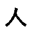 m, for example.

The mixed binder may function to allow the heat generating paste composition to have a heat resistance even within a temperature range of about 300°C, and have a shape mixed with epoxy acrylate, hexamethylene diisocyanate, polyvinyl acetal and phenol resin. For example, the mixed binder may be a mixed shape of epoxy acrylate, polyvinyl acetal and phenol resin, or may be a mixed shape of hexamethylene diisocyanate, polyvinyl acetal and phenol resin. The present disclosure has an advantageous effect in that there is no resistance change in material or damage to the piece even in a high temperature of about 300°C by increasing the heat resistance of the mixed binder.

Here, the phenol resin means a phenol compound including phenol and phenol derivative. For example, the phenol derivative may include p-cresol, o-guaiacol, creosol, catechol, 3-methoxy-1,2-benzenediol, homocatechol, vinylguaiacol, syringol, iso-eugenol, methoxyeugenol, o-cresol, 3-methoxy-1,2-benzenediol, (z)-2-methoxy-4-(1-propenyl)-phenol, 2,6-dimethoxy-4-(2-propenyl)-phenol, 3,4-dimethoxy-phenol, 4ethyl-1,3-benzenediol, resole phenol, 4-methyl-1,2-benzenediol, 1,2,4-Benzenetriol, 2-methoxy-6-methylphenol, 2-methoxy-4-vinylphenol, or 4-ethyl-2-methoxy-phenol, but the present disclosure is not limited thereto.

The mixed ratio of the mixed binder may be polyvinyl acetal resin 10∼150 parts by weight or phenol resin 100∼500 parts by weight against epoxy acrylate or hexamethylene diisocyanate 100 parts by weight. When the content of phenol resin is less than 100 parts by weight, the heat resistance of the heat generating paste composition may deteriorate, and when the content of phenol resin is more than 500 parts by weight, the flexibility of the heat generating paste composition may deteriorate (brittleness increased).

The organic solvent is to disperse conductive particles and mixed binder, and may be a solvent mixed with two or more substances selected from carbitol acetate, butyl carbitol acetate, DBE(dibasic ester), ethyl carbitol, ethyl carbitol acetate, dipropylene glycol methyl ether, cellosolve acetate, butanol and octanol.

Meantime, the process for dispersion may be applied with conventionally used various methods, and may be realized, for example, through ultra-sonication, roll mill, bead mill or ball mill processes.

The dispersant is used to further facilitate the dispersion, and may use a conventional dispersant used in the relevant industries such as BYK dispersant, an amphoteric surfactant such as triton X-100, and an ionic surfactant such as SDS.

The heat generating paste composition according to an exemplary embodiment of the present disclosure may further comprise a silane coupling agent 0.5∼5 parts by weight against the heat generating paste composition 100 parts by weight.

The silane coupling agent functions to increase an adhesive strength among resins when the heat generating paste compositions are mixed. The silane coupling agent may be epoxy-containing silane or mercapto-containing silane.

An example of silane coupling agent may include, epoxy-contained 2-(3,4 epoxy cyclohexyl)- ethyltrimetoxysilane, 3- glycidoxytrimethoxysilane, 3-glycidoxypropyltriethoxysilane and 3-glycidoxypropyltriethoxysilane, and amine group-contained N-2(amino-ethyl)3- aminopropylmethyldimethoxysilane, N-2(amino-ethyl)3-aminopropyltrimethoxysilane, N-2(amino-ethyl)3- aminopropyltrimethoxysilane, 3-aminopropyltriethoxysilane, 3-aminopropyltriethoxysil, 3- triethoxysily-N-(1,2-dimethylbutylidene) propylamin, N-phenyl-3- aminopropyltrimethoxysilane, and mercapto-contained 3-mercapto propylmethyldimethoxysilane, 3-mercaptopropyltriethoxysilane, and isocyanate- contained 3-isocyanatepropyltriethoxysilane, and the present disclosure is not limited to what is enumerated above.

The present disclosure may further provide a plane heater in which the heat generating paste composition according to the exemplary embodiment of the present disclosure is formed on a substrate by screen-printing, gravure-printing (and roll-to-roll gravure printing) or comma printing (and roll-to-roll comma printing).

Here, the substrate may include polycarbonate, PET, PEN, polyimide, cellulose ester, nylon, polypropylene, polyacrylonitrile, polysulfone, polyether sulfone, polyvinylidene fluoride, glass, glass fiber(mat), ceramic, SUS, copper or aluminum substrate, and the present disclosure is not limited thereto. The substrate may be adequately selected depending on application field of heater and used temperature.

The plane heater may be formed in such a manner that the heat generating paste composition according to the exemplary embodiment of the present disclosure is formed on a substrate in a desired pattern by screen-printing, gravure-printing (and roll-to-roll gravure printing) or comma printing (and roll-to-roll comma printing), drying, and curing, where an Ag paste or a conductive paste may be formed on the substrate, which is then dried and cured to allow forming an electrode.

Alternatively, an Ag paste or a conductive paste may be formed on a substrate, printed, dried/cured, and then, the heat generating paste composition according to the exemplary embodiment of the present disclosure may be screen-printed or gravure-printed thereon to form an electrode.

Meantime, the plane heater may further include a protective layer coated on an upper surface. The protective layer may be formed using silica (SiO₂). When the protective layer is formed with silica, the heater can advantageously maintain flexibility even if coated on a heat generating surface.

Hereinafter, a heat generating paste composition for forming a thick film and a plane heater using the same will be described in detail through experimental examples. The below experimental examples are simply exemplary and therefore, the present disclosure is not limited thereto.

### Experimental example

### (1) Preparation of exemplary embodiments & comparative examples

Exemplary embodiments (three types) and comparative examples (three types) were prepared as shown in the following [Table 1]. It is to be mentioned that the composition ratios indicated in [Table 1] are described in weight %.

**[Table 1]**

| | Exemplar y embodime nt 1 | Exemplary embodime nt 2 | Exemplary embodime nt 3 | comparativ e example 1 | comparativ e example 2 | comparativ e example 3 |
|---|---|---|---|---|---|---|
| CNT particle | 4 | 5 | 6 | 4 | 5 | 6 |
| CNP particle | 8 | 9 | 15 | - | - | - |
| Mixed binder | 20 | 15 | 22 | - | - | - |
| Ethyl cellulose | - | - | - | 10 | 12 | 14 |
| Organic solvent | 63 | 67 | 52 | 82 | 79 | 76 |
| Dispersant( BYK) | 5 | 4 | 5 | 4 | 4 | 4 |

In case of the exemplary embodiments, CNT particles and CNP particles (exemplary embodiments 1∼3) were added to the carbitol acetate solvent according to the composition in [Table 1], and BYK dispersant was added, and a dispersing solution A was manufactured through a 60-minute ultrasonic wave treatment. Thereafter, the mixed binder was added to the carbitol acetate solvent to obtain a master batch through mechanical agitation. Next, the dispersing solution A and the master batch were initially kneaded and secondarily kneaded through 3-roll-mill processes to manufacture a heat generating paste composition.

In case of the comparative examples, CNT particles were added to the carbitol acetate solvent according to the composition in [Table 1], and BYK dispersant was added, and a dispersing solution was manufactured through a 60-minute ultrasonic wave treatment. Thereafter, ethyl cellulose was added to the carbitol acetate solvent to obtain a master batch through mechanical agitation. Next, the dispersing solution B and the master batch were initially kneaded and secondarily kneaded through 3-roll-mill processes to manufacture a heat generating paste composition.

### (2) Evaluation of Properties in Plane heater

The plane heater sample was manufactured by screen-printing and curing the heat generating paste composition according to the exemplary embodiments and comparative examples in 10x10cm size on a polyimide substrate, and printing and curing an Ag paste electrode on both upper distal ends.

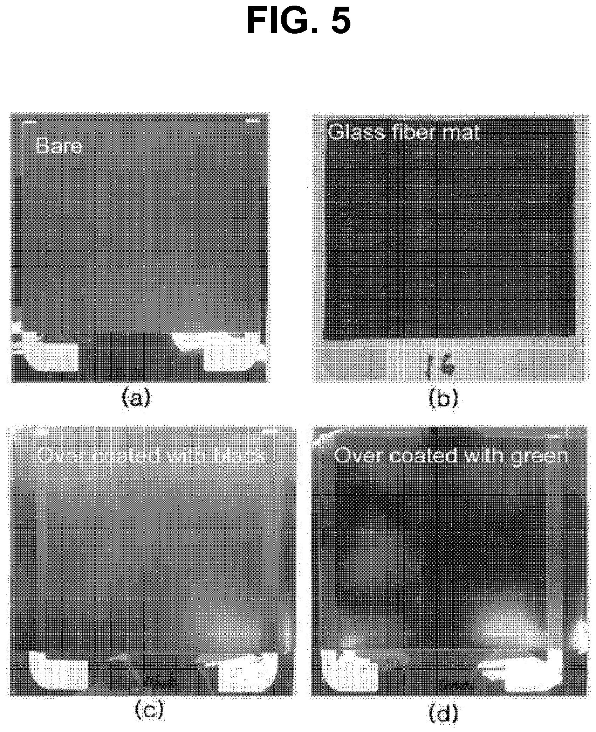

In connection therewith, FIG. 5 is an image of specimen piece of a plane heater using a heat generating paste composition in a glass heating device according to an exemplary embodiment of the present disclosure. FIG.5a is a plane heater formed by allowing a heat generating paste composition to be screen-printed on a polyimide substrate, FIG. 5b is a plane heater formed by allowing the heat generating paste composition to be screen-printed on a glass fiber mat. FIGS. 5c and 5d are an image where a protective layer is coated on an upper surface of a plane heater (a black protective layer is coated in case of FIG. 5c, and a green protective layer is coated in case of FIG. 5d).

Specific resistances of plane heater samples are measured that were manufactured according to the plane heater samples (exemplary embodiments) and plane heater samples (comparative examples) as shown in FIG. 5a. The applied currents/voltages are indicated in Table 2. Furthermore, in order to ascertain a risen temperature effect in response to the applied currents/voltages, the plane heaters corresponding to the exemplary embodiments and comparative examples were respectively increased in temperature to 40°C, 100°C and 200°C, and DC voltages and currents were measured at the time of arriving at those temperatures.

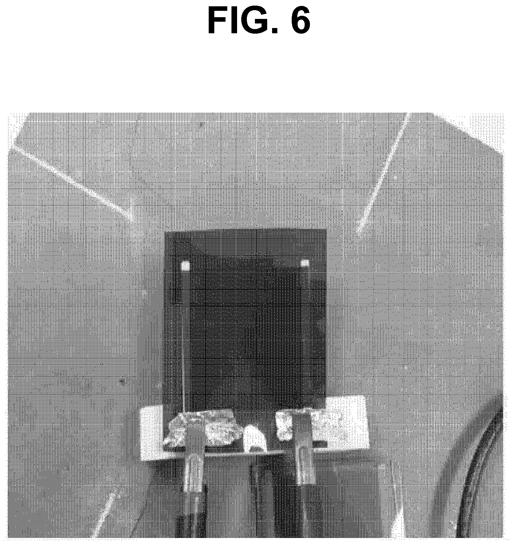

Furthermore, heat generation stability was tested for each sample at a temperature of 200°C. In connection therewith, FIG. 6 is an image of a heat generation stability test of a plane heater manufactured by an exemplary embodiment of a glass heating device according to an exemplary embodiment and by a comparative example, the results of which are shown in Table 2.

**[Table 2]**

| | Exemplar y embodim ent 1 | Exemplary embodime nt 2 | Exemplary embodime nt 3 | Comparati ve example 1 | Comparati ve example 2 | Comparati ve example 3 |
|---|---|---|---|---|---|---|
| Specific resistance(× 10 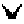 ²Ωcm | 1.9 | 2.55 | 2.96 | 9.73 | 8.52 | 6.23 |
| Arriving at 40°C, DC driving, voltage/curr ent | 5V/0.2A | 6V/0.2A | 7V/0.2A | 20V/0.3A | 16V/0.2A | 12V/0.2A |
| Arriving at 100°C, DC driving, voltage/current | 9V/0.5A | 12V/0.4A | 14V/0.5A | 48V/0.7A | 40V/0.7A | 26V/0.6A |
| Arriving at 200°C, DC driving, voltage/curr ent | 20V/0.6A | 24V/0.7A | 24V/1.0A | - | - | - |
| Heat generation stability (day) | Over 20 days | Over 20 days | Over 20 days | bad | bad | bad |

Referring to the above [Table 2], the specific resistances of plane heaters corresponding to the exemplary embodiments were measured smaller than the specific resistances of plane heaters corresponding to the comparative examples, and as a result, the driving voltages/currents necessary for reaching respective temperatures of plane heaters corresponding to the exemplary embodiments were measured smaller than those of the plane heaters corresponding to the comparative examples. That is, it could be ascertained that the plane heaters corresponding to the exemplary embodiments were driven at lower voltages and currents than those of the plane heaters corresponding to the comparative examples.

Furthermore, the plane heaters according to the exemplary embodiments 1∼3 have shown to maintain stability for over 20 days under heat generation driving at 200°C (no separate protective layers), whereas defect phenomena were observed from the plane heaters corresponding to the comparative examples that surface of heat generation part bulged within 2 hours during heat generation driving at 200°C. That is, it could be ascertained that the plane heaters according to the exemplary embodiments were also stably driven at temperatures higher than 200°C over the plane heaters corresponding to the comparative examples.

The present disclosure may additionally provide the abovementioned plane heater and a portable heater including a power supply part supplying a power to the plane heater.

Here, the power supply part may include a lead electrode formed by being coated at left/right sides of the plane heater, and a power connection electrode formed by being attached to the lead electrode. In some cases, the power connection electrode may be directly connected to the plane heater. The lead electrode or the power connection electrode may be formed by using an Ag paste, a Cu paste and a Cu tape.

The plane heater of the portable heater according to the present disclosure may be attached, embedded or mounted at an inside/outside of a body, and may take a shape of being mounted with a power supply part for driving the plane heater. The portable heater may be used for an inner sheet of a baby carriage, heat generating socks, heat generating shoes, a heat generating hat or cap, a portable heat generating mat, a portable cooker, and a vehicular heat generating sheet.

Particularly, the advantage is that the plane heater employed for the portable heater according to the present disclosure can be driven with a lower voltage and current as elaborated in the foregoing, and therefore may be driven by a chargeable and dischargeable secondary cell battery to thereby enhance the portability, and to greatly increase the use time.

After all, the heater apparatus for electric vehicle and the control method thereof according to the present disclosure can maximize a heating efficiency while applying a heating resistor including a plane heater to a conventional heater device, and may include a heat generating paste composition low in resistance change caused by temperatures and drivable in a low voltage and a low electric power due a specific resistance being low.

Although the abovementioned embodiments according to the present disclosure have been described in detail with reference to the above specific examples, the embodiments are, however, intended to be illustrative only, and thereby do not limit the scope of protection of the present disclosure. Thereby, it should be appreciated by the skilled in the art that changes, modifications and amendments to the above examples may be made without deviating from the scope of protection of the disclosure.

## Claims

1. A heater apparatus for electric vehicle, the heater apparatus comprising:
a water pump circulating a supplied water;
a heating resistor mounted with at least one plane heater formed through a heat generating paste composition to heat the circulated water;
a water temperature sensor measuring a temperature of warm water heated by the heating resistor; and
a controller adjusting the heating resistor to allow a measurement temperature measured by the water temperature sensor to satisfy a set temperature value, wherein the heat generating paste composition includes a carbon nano tube particle 3∼6 parts by weight, a carbon nanoparticle 0.5∼30 parts by weight, a mixed binder 10∼30 parts by weight, an organic solvent 29∼83 parts by weight and a dispersant 0.5∼5 parts by weight, against a heat generating paste composition 100 parts by weight, wherein
the mixed binder is mixed with epoxy acrylate, polyvinyl acetal and phenolic resin, or mixed with hexamethylene diisocyanate, polyvinyl acetal and phenolic resin.

2. The heater apparatus of claim 1, wherein the warm water heated by the heating resistor is distributed to a plurality of seat heaters, and the plurality of seat heaters includes a one side seat heater arranged at one side of a vehicle by being formed with a passenger seat heater and a driver heater, and the other side seat heater arranged at the other side of the vehicle by being formed with a plurality of passenger seat heaters, and the one side seat heater and the other side seat heater are mutually connected in parallel through a parallel pipe.

3. The heater apparatus of claim 1, wherein the set temperature value satisfies a temperature range of 60°C∼65°C.

4. The heater apparatus of claim 1, further comprising a pipe temperature sensor measuring a temperature of warm water in order to determine whether the heating resistor is overheated.

5. The heater apparatus of claim 1, wherein the mixed binder is mixed with polyvinyl acetal 10∼150 parts by weight and phenolic resin 100∼500 parts by weight, against epoxy acrylate or hexamethylene diisocyanate 100 parts by weight.

6. The heater apparatus of claim 1, further comprising a silane coupling agent 0.5∼5 parts by weight against the heat generating paste composition 100 parts by weight.

7. The heater apparatus of claim 1, wherein the carbon nano tube particle is a multi-wall carbon nano tube particle.

8. The heater apparatus of claim 1, wherein the organic solvent is a solvent mixed with two or more substances selected from carbitol acetate, butyl carbitol acetate, DBE(dibasic ester), ethyl carbitol, ethyl carbitol acetate, dipropylene glycol methyl ether, cellosolve acetate, bytyl cellosolve acetate, butanol and octanol.

9. The heater apparatus of claim 1, wherein the plane heater is formed by the heat generating paste composition being screen printed, gravure printed or comma coated on a substrate.

10. The heater apparatus of claim 9, wherein the substrate is a polyimide substrate, a glass fiber mat, or a ceramic glass.

11. The heater apparatus of claim 9, wherein the plane heater further includes a protective layer coated on an upper surface of the plane heater and formed with an organic matter having a silica or a black pigment like a carbon black.

12. The heater apparatus of claim 1, further comprising a power supply part supplying an electric power to the plane heater.

13. A method for controlling a heater apparatus for electric vehicle, the method comprising:
heating a heating resistor to allow a supplied water to be a warm water satisfying a set temperature value;
transmitting the heated water to a plurality of seat heaters inside a vehicle in a parallel way;
collecting warm water heat-exchanged by the plurality of seat heaters; and
re-heating the collected warm water through the heating resistor, wherein
the heating resistor is mounted with at least one plane heater formed through a heat generating paste composition, and wherein
the heat generating paste composition includes a carbon nano tube particle 3∼6 parts by weight, a carbon nanoparticle 0.5∼30 parts by weight, a mixed binder 10∼30 parts by weight, an organic solvent 29∼83 parts by weight and a dispersant 0.5∼5 parts by weight, against a heat generating paste composition 100 parts by weight, and wherein
the mixed binder is mixed with epoxy acrylate, polyvinyl acetal and phenolic resin, or mixed with hexamethylene diisocyanate, polyvinyl acetal and phenolic resin.

14. The method of claim 13, further comprising: stopping operation of the heating resistor in the transmitting step when it is determined that the heating resistor is overheated by measuring a temperature of distributed warm water.

15. The method of claim 13, further comprising: operating a water pump circulating the warm water for a predetermined time and then stopping the water pump in order to prevent an instantaneous water temperature caused by latent heat from rising when the heating step is completed.

16. The method of claim 13, wherein the set temperature value satisfies a temperature range of 60°C∼65°C.
